Europäisches Patentamt

European Patent Office

Office européen des brevets

(19)

(11) Veröffentlichungsnummer: **0 048 936**
**A1**

(12) **EUROPÄISCHE PATENTANMELDUNG**

(21) Anmeldenummer: **81107531.6**

(22) Anmeldetag: **22.09.81**

(51) Int. Cl.³: **H 04 L 25/38, H 04 L 1/20**

(30) Priorität: **26.09.80 DE 3036368**

(43) Veröffentlichungstag der Anmeldung: **07.04.82**
**Patentblatt 82/14**

(84) Benannte Vertragsstaaten: **BE FR GB IT NL**

(71) Anmelder: **SIEMENS AKTIENGESELLSCHAFT Berlin und München, Postfach 22 02 61, D-8000 München 22 (DE)**

(72) Erfinder: **Bielefeld, Josef, Dipl.-Ing., Hauptstrasse 63, D-8190 Wolfratshausen (DE)**
Erfinder: **Putz, Josef Kurt, Dipl.-Ing., Teschener Strasse 13, D-8000 München 71 (DE)**

(54) **Verfahren zum Empfang von auf mehreren parallelen Leitungen unterschiedlicher Länge gesendeten Bitfolgen.**

(57) Zu Übertragungsblöcken bestimmter Länge zusammengefaßte Bitfolgen treffen über mehrere parallele Leitungen unterschiedlicher Länge in einer Empfangs- und Auswerteeinrichtung ES ein, wobei die einzelnen Bits in einem festen Zeitrahmen gesendet werden. Zur parallelen Auswertung der Bit-Information soll die unterschiedliche Länge der einzelnen Leitungen L1 bis Ln ausgeglichen werden, ohne daß bei jeder Empfangs- und Auswerteeinrichtung ES besondere Schaltmaßnahmen getroffen werden müssen. Durch Zuordnen eines Schieberegisters (SR1 bis SRn) je Leitung (L1 bis Ln) und Abtasten der Leitungen mit einer innerhalb des Zeitrahmens liegenden Impulsserie können die je Leitung vorliegenden Abtastergebnisse am Ausgang der Schieberegister parallel abgegriffen werden. Durch besondere Wahl der wirksam werdenden Abtastimpulse können außerdem zu lange und zu kurze Bits eliminiert werden.

SIEMENS AKTIENGESELLSCHAFT
Berlin und München

Unser Zeichen
VPA 80 P 6 1 5 6 E

Verfahren zum Empfang von auf mehreren parallelen Leitungen
unterschiedlicher Länge gesendeten Bitfolgen

Die Erfindung betrifft ein Verfahren zum Empfang von auf
mehreren parallelen Leitungen unterschiedlicher Länge
eintreffenden und zu Übertragungsblöcken bestimmter Länge
zusammengefaßter Bitfolgen, wobei die einzelnen Bits
innerhalb eines festen Zeitrahmens gesendet werden.

Bei derartigen Verfahren bereiten die unterschiedlichen
Längen der Leitungen erhebliche Schwierigkeiten beim
Empfang der gesendeten Bits, da der Sendezeitrahmen zwar
bekannt ist, aber nicht der jeweilige Empfangszeitrahmen
bei den verschiedenen Empfangsanordnungen. Es muß daher
jeweils eine individuelle Anpassung an die Leitungslänge
erfolgen, was einen erheblichen Schaltungsaufwand zur
Folge hätte.

Aufgabe der Erfindung ist es, ein Verfahren der obengenannten Art anzugeben, bei welchem empfangsseitig
jeweils pro Empfangsanordnung eine automatische Leitungslängenanpassung erfolgt, ohne daß pro Empfangsanordnung
individueller Schaltungsaufwand notwendig ist.

Diese Aufgabe wird für ein Verfahren der eingangs
genannten Art erfindungsgemäß dadurch gelöst, daß während
vorgegebener, den Zeitrahmen entsprechenden Abtastzeiten
die ankommenden Leitungen mit einer ausgewählten Abtastfrequenz abgetastet werden, daß getrennt nach Leitungen
die während der Abtastimpulse den jeweiligen Leitungszuständen entsprechenden Pegelwerte seriell in den
einzelnen Leitungen zugeordnete Schieberegister eingelesen

Som 1 Kel / 12.9.8o

0048936

80 P 6 1 5 6 E

werden, daß die in die Schieberegister eingelesenen Pegelwerte Auswerteschaltungen zugeführt werden, welche abhängig von den eingelesenen Pegelwerten auf ein gültiges Bit erkennen, wenn während der Abtastzeit ein erster Wechsel des Pegelwertes erfolgt und der sich nach diesem Wechsel ergebende Pegelwert während einer vorgegebenen Anzahl von Abtastimpulsen aufrecht erhalten bleibt, und wenn danach innerhalb einer vorgegebenen Zeitspanne ein zweiter Wechsel des Pegelwertes erfolgt, so daß wieder der Ausgangspegelwert vorliegt.

Aufgrund des erfindungsgemäßen Verfahrens ist es möglich, Bits auf mehreren Leitungen parallel zu empfangen, wobei bei unterschiedlich langen Leitungen eine automatische Leitungslängenanpassung erfolgt. Es sind daher keine individuellen Schaltmaßnahmen für die einzelnen Leitungen unterschiedlicher Länge notwendig.

Weitere Vorteile und Ausgestaltungen des erfindungsgemäßen Verfahrens sowie eine beispielhafte Schaltungsanordnung zur Durchführung des erfindungsgemäßen Verfahrens ergeben sich aus den Unteransprüchen sowie der nachfolgenden Beschreibung eines Ausführungsbeispiels.

In der Zeichnung ist ein Ausführungsbeispiel einer Schaltungsanordnung zur Durchführung des erfindungsgemäßen Verfahrens dargestellt, an dem mehrere Einzelheiten der Erfindung nachfolgend erläutert werden sollen. Es zeigen

Figur 1 eine Empfangsanordnung für mehrere parallel ankommende Leitungen und

Figur 2 den Aufbau einer Auswerteschaltung der in Figur 1 dargestellten Empfangsanordnung.

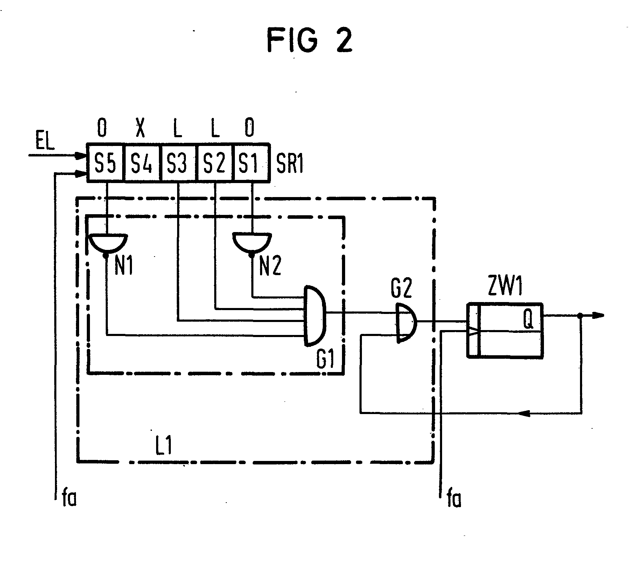

Zusammen mit der Beschreibung der in Figur 2 dargestellten Auswerteschaltung soll zuerst das erfindungsgemäße Verfahren näher erläutert werden. In der Figur sind dargestellt die Auswerteschaltung L1 mit dem Gatternetzwerk
N1, N2 und G1 sowie dem ODER-Gatter G2, ferner das Schieberegister SR1 mit den Speicherplätzen S1 bis S5 sowie
der Speicherplatz ZW1 des Zwischenspeichers ZS.

Über den Eingang EL des Schieberegisters SR1 werden die
einzelnen den jeweiligen Leitungszuständen entsprechenden
Pegelwerte seriell in das Schieberegister eingelesen.
Im dargestellten Ausführungsbeispiel wird angenommen,
daß die Abtastzeit so gewählt ist, daß während dieser
Zeit die einzelnen Leitungen fünf mal abgefragt werden.
Weiterhin wird beim dargestellten Ausführungsbeispiel angenommen, daß ein Bit als richtig erkannt wird, wenn, wie
in Fig.2 dargestellt, im Schieberegister SR1 die Pegelwerte OLLXO anstehen. In dieser Darstellung bedeutet X,
daß die Größe des Pegelwertes an dieser Stelle ohne Bedeutung für die Auswertung des empfangenen Bits ist. Bei
den dargestellten Pegelwerten ist weiter angenommen, daß
der Pegel auf einer nicht beaufschlagten Leitung den
Wert 0 hat und bei einer beaufschlagten Leitung, d.h.
wenn gesendet wird, den Pegelwert L aufweist.

Daraus ergibt sich, daß, wenn ein gültiges Bit vorliegen
soll, zuerst ein Wechsel des Pegelwertes von 0 auf L
erfolgen muß. Weiterhin ergibt sich, daß während mehrerer
Abtastimpulse dieser neue Pegelwert L erhalten bleiben
muß, da jedes Bit eine bestimmte Mindestdauer aufweisen
muß. Die maximale Dauer des zu empfangenden Bits ist
nun dadurch bestimmt, daß ein zweiter Wechsel des Pegelwertes auf den ursprünglichen Pegelwert erfolgen muß.
Daraus ergibt sich, daß die Pegelwerte, die zwischen den
Zeitpunkten liegen, an welchen zuerst die vorgegebene
Mindestdauer des Bits erkannt worden ist und an welchen die maximale Dauer des empfangenen Bits erkannt worden ist, für die Auswertung des Bits unerheblich sind. Durch die Wahl der Anzahl der nicht auszuwertenden Pegelwerte kann nun die zulässige zeitliche Länge des zu empfangenden Bits bestimmt werden. Durch die Wahl einer geeigneten Kombination von Pegelwerten ist somit eine automatische Anpassung an die Leitungslänge gewährleistet, sowie weiterhin eine Störausblendung von zu kurzen bzw. zu langen Bits.

Anhand der Figur 2 ist zu erkennen, daß am Ausgang des Gatternetzwerkes N1, N2 und G1 ein Impuls anliegt, sobald die gewählte Kombination von Pegelwerten zur Erkennung eines gültigen Bits erstmalig erreicht ist. Über das ODER-Gatter G2 wird dann das als Zwischenregister ZW1 dienende Flip-Flop gesetzt, welches durch die Rückführung des Ausgangs auf einen der Eingänge des ODER-Gatters G2 nach dem ersten Erkennen eines gültigen Bits gesetzt bleibt, unabhängig von den nach Erkennen des Bits in das Schieberegister eingelesenen Pegelwerten.

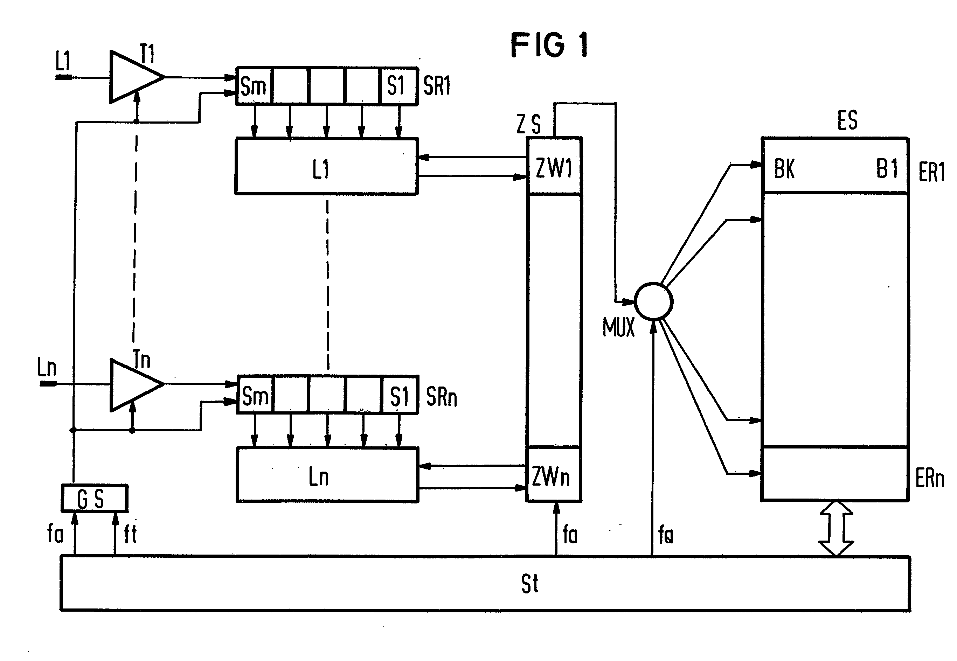

Figur 1 zeigt den Gesamtaufbau einer Empfangsanordnung, die zur Durchführung des erfindungsgemäßen Verfahrens dient. Es sind dargestellt die parallel ankommenden Leitungen L1 bis Ln mit den Torschaltungen T1 bis Tn, den Schieberegistern SR1 bis SRn und den zugehörigen Auswerteschaltungen L1 bis Ln, sowie der Zwischenspeicher ZS mit den Speicherplätzen ZW1 bis ZWn, die Verteilerschaltung MUX, der Empfangsspeicher ES mit den als Schieberegistern ausgebildeten Speicherplätzen ER1 bis ERn, sowie die Steuerschaltung St mit der Gatterschaltung GS. Mit ft ist die Frequenz, welche die Länge der Abtastzeiten festlegt bezeichnet, mit fa die eigentliche Abtastfrequenz.

0048936

Vor Beginn jeder Abtastzeit werden die Schieberegister und der Zwischenspeicher ZS auf einen definierten Anfangswert gesetzt. Mit jedem Abtastimpuls werden die Torschaltungen T1 bis Tn durchgeschaltet und der dem jeweiligen Leitungszustand entsprechende Pegelwert seriell in eines der Schieberegister SR1 bis SRn übernommen. Eine je nach Auswertekriterium einstellbare Auswerteschaltung L1 bis Ln verknüpft eine Reihe von Pegelwerten miteinander, wie anhand von Figur 2 dargestellt wurde, bildet mit dem Inhalt des Zwischenspeichers ein neues Zwischenergebnis und überträgt dieses wieder in den Zwischenspeicher. Dieser Vorgang wird bei jedem Abtastimpuls wiederholt. Die Anzahl der Abtastimpulse wird durch die Festlegung der Abtastzeiten beschränkt.

Die Steuerschaltung St erzeugt alle für den Betrieb der Empfangsanordnung erforderlichen Steuersignale wie die Frequenzen fa, ft und die Adressen des Empfangsspeichers ES für die Verteilerschaltung MUX.

Am Ende jeder Abtastzeit steht in jedem Speicherplatz des Zwischenspeichers ZS als Ergebnis des Abtastvorgangs ein Bit der zu empfangenden Bitfolge. Der Zwischenspeicher ZS ist als Schieberegister ausgebildet. Die einzelnen Bits werden aus dem Zwischenspeicher ZS seriell ausgelesen und über eine Verteilerschaltung MUX in die entsprechenden Speicherplätze des Empfangsspeichers ES eingelesen. Der gesamte Empfangsspeicher ES besteht aus einzelnen Schieberegistern ER1 bis ERn, von denen jedes Schieberegister einer Leitung zugeordnet ist. Die in den einzelnen Schieberegistern des Empfangsspeichers ES am Ende eines Abtastzyklus eingelesenen Bitfolgen können anschließend pro Leitung parallel ausgelesen und weiterverarbeitet werden.

4 Patentansprüche
2 Figuren

0048936

Patentansprüche

1. Verfahren zum Empfang von auf mehreren parallelen Leitungen unterschiedlicher Länge eintreffenden und zu Übertragungsblöcken bestimmter Länge zusammengefaßter Bitfolgen, wobei die einzelnen Bits innerhalb eines festen Zeitrahmens gesendet werden, dadurch gekennzeichnet, daß während vorgegebener, dem Zeitrahmen entsprechenden Abtastzeiten die ankommenden Leitungen (L1 bis Ln) mit einer ausgewählten Abtastfrequenz abgetastet werden, daß getrennt nach Leitungen die während der Abtastimpulse den jeweiligen Leitungszuständen entsprechenden Pegelwerte seriell in den einzelnen Leitungen zugeordnete Schieberegister (SR1 bis SRn) eingelesen werden, daß die in die Schieberegister eingelesenen Pegelwerte Auswerteschaltungen (L1 bis Ln) zugeführt werden, welche abhängig von den einzelnen Pegelwerten auf ein gültiges Bit erkennen, wenn während der Abtastzeit ein erster Wechsel des Pegelwertes erfolgt und der sich nach diesem Wechsel ergebende Pegelwert während einer vorgegebenen Anzahl von Abtastimpulsen aufrecht erhalten bleibt, und wenn danach innerhalb einer vorgegebenen Zeitspanne ein zweiter Wechsel des Pegelwertes erfolgt, so daß wieder der Ausgangspegelwert vorliegt.

2. Verfahren nach Anspruch 1, dadurch gekennzeichnet, daß die Anzahl der Abtastimpulse, während der nach dem ersten Wechsel des Pegelwertes der neue Pegelwert aufrecht erhalten bleibt, die Mindestdauer des Bits bestimmt.

3. Verfahren nach Anspruch 1, dadurch gekennzeichnet, daß der Zeitraum zwischen dem ersten und dem zweiten Wechsel des Pegelwertes die maximale Dauer eines zu übertragenden Bits bestimmt.

0048936

4. Schaltungsanordnung zur Durchführung des Verfahrens nach Anspruch 1 bis 3, dadurch gekennzeichnet, daß die ankommenden Leitungen (L1 bis Ln) über Torschaltungen (T1 bis Tn) mit den Eingängen von Schieberegistern (SR1 bis SRn) verbunden sind, daß die Ausgänge der Schieberegister (SR1 bis SRn) jeweils mit einem Gatternetzwerk (N1, N2, G1) verbunden sind, an dessen Ausgang ein Signal anliegt, wenn die im Schieberegister eingelesenen Pegelwerte ein gültiges Bit kennzeichnen, daß der Ausgang des Gatternetzwerkes mit dem ersten Eingang eines ODER-Gatters G2 verbunden ist, dessen Ausgang mit dem Setzeingang eines als Speicherplatz eines Zwischenregisters ZS dienenden Flip-Flops ZW1 nis ZWn verbunden ist, wobei der Ausgang des Flip-Flops u.a. mit dem zweiten Eingang des ODER-Gatters G2 verbunden ist.

FIG 1

1/2

0048936

0048936

FIG 2

EP 81 10 7531

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | US - A - 3 764 989 (McCLELLAN) <br> * Spalte 1; Spalte 2, Zeilen 1-32 * | 1-3 | H 04 L 25/38 <br> 1/20 |
| | -- | | |
| | US - A - 3 366 930 (BENNETT) <br> * Spalte 2, Zeilen 5-23; Spalte 5, Zeilen 36-41; Spalte 9, Zeile 55 - Spalte 10, Zeile 19 * | 1-4 | |
| | -- | | |
| | US - A - 3 963 871 (THYSELIUS) <br> * Spalte 1, Zeilen 1-49; Spalte 8, Zeilen 19-36 * | 1-3 | RECHERCHIERTE SACHGEBIETE (Int. Cl.³) <br><br> H 04 L 1/20 <br> 7/02 <br> 25/38 <br> H 04 B 12/00 <br> H 03 K 5/01 <br> 5/08 |
| | -- | | |
| | US - A - 3 938 081 (KIRK) <br> * Spalte 2, Zeilen 52-65; Spalte 5, Zeilen 17-27, 44-54 * | 1-4 | |
| | -- | | |
| EP | FR - A - 2 465 371 (C.G.C.T.) <br> * Anspruch 1; Figur 4 * | 1-3 | |
| | ---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-01-1982 | GEISLER |

EPA form 1503.1 06.78